# EUROPÄISCHE PATENTSCHRIFT

(11) **EP 2 335 100 B1**
(45) Veröffentlichungstag und Bekanntmachung des Hinweises auf die Patenterteilung: **08.05.2019**
(21) Anmeldenummer: 09744940.9
(22) Anmeldetag: 15.09.2009
(51) Int. Cl.: G02B 5/18

(54) **GITTERBILD MIT ACHROMATISCHEN GITTERFELDERN**
GRID IMAGE HAVING ACHROMATIC GRID FIELDS
IMAGE TRAMÉE PRÉSENTANT DES CHAMPS DE RÉSEAU ACHROMATIQUES

(30) Priorität: 29.09.2008 DE 102008049513
(43) Veröffentlichungstag der Anmeldung: 22.06.2011
(73) Patentinhaber: Giesecke+Devrient Currency Technology GmbH, 81677 München (DE)
(72) Erfinder: DICHTL, Marius, 81371 München (DE); GERHARDT, Thomas, 81539 München (DE)
(86) Internationale Anmeldenummer: PCT/EP2009/006654
(87) Internationale Veröffentlichungsnummer: WO 2010/034420

(56) Entgegenhaltungen:
- DE-A1-102006 012 732
- DE-A1-102007 009 646

## Beschreibung

Die Erfindung betrifft ein Gitterbild mit achromatischen Gitterfeldern. Die Erfindung betrifft ferner ein Verfahren zur Herstellung eines derartigen Gitterbilds sowie ein Sicherheitselement, ein Sicherheitspapier und einen Datenträger mit einem solchen Gitterbild.

Zur Echtheitsabsicherung von Kreditkarten, Banknoten und anderen Wertdokumenten werden seit einigen Jahren Hologramme, holographische Gitterbilder und andere hologrammähnliche Beugungsstrukturen eingesetzt. Im Banknoten- und Sicherheitsbereich werden im Allgemeinen holographische Beugungsstrukturen verwendet, die sich durch Prägung von holographisch erzeugten Gitterbildern in thermoplastisch verformbare Kunststoffe oder UV-härtbaren Lack auf Foliensubstraten herstellen lassen.

Echte Hologramme entstehen dabei durch Beleuchtung eines Objekts mit kohärentem Laserlicht und Überlagerung des von dem Objekt gestreuten Laserlichts mit einem unbeeinflussten Referenzstrahl in einer lichtempfindlichen Schicht. Sogenannte holographische Beugungsgitter erhält man, wenn die in der lichtempfindlichen Schicht überlagerten Lichtstrahlen aus räumlich ausgedehnten, einheitlichen kohärenten Wellenfeldern bestehen. Die Einwirkung der überlagerten Wellenfelder auf die lichtempfindliche Schicht, wie etwa einen photographischen Film oder eine Photoresistschicht, erzeugt dort ein holographisches Beugungsgitter, das beispielsweise in Form heller und dunkler Linien in einem photographischen Film oder in Form von Bergen und Tälern in einer Photoresistschicht konserviert werden kann. Da die Lichtstrahlen in diesem Fall nicht durch ein Objekt gestreut worden sind, erzeugt das holographische Beugungsgitter lediglich einen optisch variablen Farbeindruck, jedoch keine Bilddarstellung.

Auf Grundlage von holographischen Beugungsgittern lassen sich holographische Gitterbilder erzeugen, indem nicht die gesamte Fläche des lichtempfindlichen Materials mit einem einheitlichen holographischen Beugungsgitter belegt wird, sondern indem geeignete Masken verwendet werden, um jeweils nur Teile der Aufnahmefläche mit einem von mehreren verschiedenen einheitlichen Gittermustern zu belegen. Ein solches holographisches Gitterbild setzt sich aus mehreren Gitterfeldern mit unterschiedlichen Beugungsgittermustern zusammen, die in der Regel in flächiger, streifenförmiger oder pixelartiger Ausführung nebeneinander angeordnet sind. Durch geeignete Anordnung der Bereiche lässt sich mit einem derartigen holographischen Gitterbild eine Vielzahl unterschiedlicher Bildmotive darstellen. Die Beugungsgittermuster können dabei nicht nur durch direkte oder indirekte optische Überlagerung kohärenter Laserstrahlen, sondern auch mittels Elektronenstrahllithographie hergestellt werden. Häufig wird eine Musterbeugungsstruktur erzeugt, die anschließend in eine Reliefstruktur umgesetzt wird. Diese Reliefstruktur kann als Prägewerkzeug verwendet werden.

In der Druckschrift WO 2005/071444 A2 sind Gitterfelder mit Strichgitterlinien beschrieben, die durch die Parameter Orientierung, Krümmung, Beabstandung und Profilierung charakterisiert sind, wobei zumindest einer dieser Parameter über der Fläche des Gitterfelds variiert. Variiert zumindest einer der Parameter zufällig, so spricht man von sogenannten Mattstrukturen. Diese zeigen bei Betrachtung keine diffraktiven Effekte, sondern Streueffekte und weisen ein mattes, vorzugsweise keinerlei Farbigkeit zeigendes Erscheinungsbild auf. Die Mattstrukturen zeigen bei reinen Streueffekten aus allen Betrachtungswinkeln das gleiche Erscheinungsbild.

Aus der Druckschrift DE 10 2006012 732 A1 ist ein Gitterbild mit achromatischen Gitterbereichen, die ein betrachtungswinkelabhängiges Erscheinungsbild aufweisen, bekannt. Aufgrund von Streueffekten zeigen die Gitterbereiche ein mattes Erscheinungsbild.

Auch in der Druckschrift DE 103 08 327 A1 ist ein Gitterbild mit zwei oder mehr Gitterfeldern beschrieben, von denen zumindest ein Gitterfeld ein achromatisches Gitterfeld mit einem betrachtungswinkelabhängigen visuellen Erscheinungsbild ist.

Ausgehend davon liegt der Erfindung die Aufgabe zugrunde, ein Gitterbild der eingangs genannten Art weiter zu verbessern und insbesondere unter Beibehaltung der bisherigen Vorteile Gitterbilder mit neuen optischen Effekten zu schaffen und/ oder die Fälschungssicherheit der Gitterbilder weiter zu erhöhen.

Diese Aufgabe wird durch das Gitterbild mit den Merkmalen des Hauptanspruchs gelöst. Ein Herstellungsverfahren, ein Sicherheitselement, ein Sicherheitspapier sowie ein Datenträger mit einem solchen Gitterbild sind in den nebengeordneten Ansprüchen angegeben. Weiterbildungen der Erfindung sind Gegenstand der abhängigen Ansprüche.

Ein Gitterbild gemäß der Erfindung wird durch den Anspruch 1 definiert.

Durch eine solche Gestaltung lassen sich Mattstruktur-Gitterbilder erzeugen, die das vorbestimmte Motiv für einen Betrachter mit einem relief- oder linsenartigen dreidimensionalen Eindruck darstellen, wobei die Stärke des relief- oder linsenartigen dreidimensionalen Eindrucks in weitem Rahmen durch die Wahl der Streuungsparameter eingestellt werden kann, wie nachfolgend genauer erläutert.

Eine zufällige Variation eines Parameters bedeutet dabei im Sinne der Erfindung, dass der Parameter einer bestimmten Wahrscheinlichkeitsfunktion (bei diskreten Parametern) bzw. Dichtefunktion (bei kontinuierlichen Parametern) gehorcht, die für jeden Wert des Parameters die Auftretenswahrscheinlichkeit bzw. die Wahrscheinlichkeitsdichte dieses Werts angibt. Wird die Häufigkeit der Parameterwerte der Gesamtheit der Gitterlinien eines Gitterfelds betrachtet, so wird bei einer Auftragung dieser Häufigkeiten näherungsweise die zugehörige Wahrscheinlichkeitsfunktion bzw. Dichtefunktion dieses Parameters rekonstruiert. Der Parameterwert für eine bestimmte, beliebig herausgegriffene Gitterlinie lässt sich dagegen nicht auf offensichtliche Weise vorhersagen.

Die Wahrscheinlichkeitsfunktionen bzw. Dichtefunktionen unterschiedlicher Parameter sind dabei grundsätzlich von einander unabhängig. In manchen Ausgestaltungen kann es sich jedoch anbieten, die Wahrscheinlichkeitsfunktionen bzw. Dichtefunktionen zweier oder mehrerer Parameter miteinander zu verknüpfen.

Die in Betracht kommenden Wahrscheinlichkeitsfunktionen bzw. Dichtefunktionen können sich über einen bestimmten Bereich erstrecken und dort konstant sein, können ein Maximum aufweisen, insbesondere symmetrisch oder asymmetrisch um dieses Maximum verteilt sein, können neben einem Maximum mindestens ein weiteres Nebenmaximum aufweisen, können mehrere etwa gleich hohe Maxima aufweisen, können diskret sein (Wahrscheinlichkeitsfunktionen), d.h. die Gitterfelder weisen bezüglich des betrachteten Parameters nur bestimmte, diskrete Werte auf, können kontinuierlich oder quasikontinuierlich sein (Dichtefunktionen), d.h. es treten alle Werte in einem bestimmten kontinuierlichen Bereich auf, oder sie können auch bereichsweise kontinuierlich oder quasikontinuierlich und bereichsweise diskret sein.

Variiert ein Gittermuster-Parameter über die Fläche eines Gitterfelds zufällig, so kann das Gitterfeld durch den mittleren Wert dieses Parameters und dessen Streuung beschrieben werden. Auch ein nicht variierender Parameter kann durch einen mittleren Wert und eine Streuung beschrieben werden, indem für die Streuung der Wert Null gesetzt wird. Der mittlere Wert eines solchen Gitterfeld-Parameters ist dann gleich dem konstanten Wert des zugehörigen, nicht variierenden Gittermuster-Parameters.

Unter einer diskreten Änderung eines Parameters wird im Gegensatz zu einer kontinuierlichen Änderung eine sprunghafte Änderung um mindestens einen bestimmten Wert ω_{d} verstanden. Beispielsweise kann in bevorzugten Ausgestaltungen vorgesehen sein, dass sich der Gitterfeld-Parameter mittlere Orientierung innerhalb des vorbestimmten Motivs von einem Gitterfeld zu einem benachbarten Gitterfeld um mindestens 1° oder mindestens 2° oder um mindestens 5° ändert. Mit einer solchen diskreten Änderung ist stets eine Unstetigkeit an der Grenze benachbarter Gitterfelder verbunden, während kontinuierliche Änderungen in der Regel stetigen Übergängen entsprechen.

In einer bevorzugten Ausgestaltung ist vorgesehen, dass in den Gitterfeldern der Gittermuster-Parameter Orientierung über die Fläche des Gitterfelds zufällig variiert, während die Profilierung der Gitterlinien in dieser Ausgestaltung konstant ist. Aufgrund der Variation des Gittermuster-Parameters Orientierung wird in der Regel auch der Gittermuster-Parameter Beabstandung in dieser Ausgestaltung variieren.

Mit Vorteil weisen die Gitterfeld-Parameter Orientierungsstreuung, Beabstandungsstreuung und Profilierungsstreuung in allen Gitterfeldern des vorbestimmten Motivs jeweils den gleichen Wert auf. Beispielsweise können die Parameter Orientierungsstreuung und Beabstandungsstreuung den über alle Gitterfelder konstanten Wert Δω = 2° aufweisen, während die Profilierungsstreuung in allen Gitterfeldern gleich Null ist. Die Stärke des reliefartigen visuellen Eindrucks ist in diesem Fall über das gesamte Motiv hinweg gleich. Es können jedoch in verschiedenen Motivbereichen auch unterschiedliche Werte für die Gitterfeld-Parameter Orientierungsstreuung, Beabstandungsstreuung und Profilierungsstreuung vorgesehen sein, so dass in verschiedenen Motivbereichen ein unterschiedlich starker Reliefeindruck entsteht. Beispielsweise können für die Gitterfeld-Parameter Orientierungsstreuung und Beabstandungsstreuung jeweils zwei gleiche oder verschiedene Werte vorgesehen werden, so dass in einem ersten Motivbereich (erste Werte) ein starker Reliefeindruck und in einem zweiten Motivbereich (zweite Werte) ein schwacher Reliefeindruck entsteht. Die verschiedenen Motivbereiche können dabei auch mit Vorteil ineinander verschachtelt angeordnet sein.

In einer vorteilhaften Ausgestaltung des Gitterbilds kann sich innerhalb des vorbestimmten Motivs neben dem Gittermuster-Parameter Orientierung auch der Gittermuster-Parameter Beabstandung der Gitterlinien von Gitterfeld zu Gitterfeld diskret ändern.

Gemäß der Erfindung sind die Gitterfeld-Parameter Orientierungsstreuung, Beabstandungsstreuung und Profilierungsstreuung so gewählt, dass das vorbestimmte Motiv einen relief- oder linsenartigen dreidimensionalen Eindruck vermittelt. Dabei führen größere Werte der genannten Streuungsparameter zu einem flacheren Erscheinungsbild, kleiner Werte der Streuungsparameter zu einem stark reliefartigen bzw. linsenartigen Eindruck, wie weiter unten genauer erläutert. Im Rahmen dieser Anmeldung werden unter "kleinen" Werten der Streuungsparameter Werte verstanden, die deutlich kleiner als die Werte der mittleren Beabstandung sind. Dies ist im Allgemeinen bei einem Wert eines Streuungsparameters der Fall, der etwa ein Zehntel des Wertes der mittleren Beabstandung in dem betrachteten Gitterfeld beträgt. Unter "großen" Werten der Streuungsparameter werden im Rahmen dieser Anmeldung Werte verstanden, die etwa den Werten der mittleren Beabstandung entsprechen.

Der Gitterfeld-Parameter mittlere Beabstandung liegt zweckmäßig zwischen 100 nm und 10 µm, bevorzugt zwischen 300 nm und 3000 nm, besonders bevorzugt zwischen 500 nm und 1600 nm. Der Wert des Gitterfeld-Parameters Orientierungsstreuung beträgt vorzugsweise weniger als +/-10°, bevorzugt weniger als +/- 3°, besonders bevorzugt weniger als +/- 0,3°.

Wertebereiche für die Beabstandungsstreuung lassen sich nicht in allgemeiner Form angeben, da diese von verschiedenen Parametern, wie z. B. der Größe des gewählten Motivs, der Größe der gesamten erfindungsgemäßen Gitterbildfläche und Gitterfelder, der Orientierungsstreuung etc. abhängt.

Die Ausdehnung der Gitterfelder liegt mit Vorteil in zumindest einer Dimension im Bereich oder unterhalb der Auflösungsgrenze des bloßen Auges, so dass die einzelnen Gitterfelder ohne Hilfsmittel gerade noch oder nicht mehr erkennbar sind. Die Gitterfelder können dazu insbesondere durch schmale Streifen mit einer Breite im Bereich oder unterhalb der Auflösungsgrenze des Auges oder durch kleine Flächenelemente beliebiger Form mit einer Größe im Bereich oder unterhalb der Auflösungsgrenze des Auges ausgebildet sind. In vorteilhaften Ausgestaltungen liegt die Ausdehnung der Gitterfelder in zumindest einer Dimension im Bereich von 100 µm oder darunter und liegt beispielsweise zwischen 10 µm und 30 µm.

Zweckmäßig weist jedes Gitterfeld des Gitterbilds eine Vorzugsrichtung auf, die einen Betrachtungsbereich festlegt, aus dem das achromatische Gitterfeld mit einem matten, vorzugsweise silbrigen Erscheinungsbild visuell in Erscheinung tritt. Der Betrachtungsbereich ist dabei vorzugsweise durch einen Winkelbereich von etwa +/-10°, bevorzugt von etwa +/- 3°, besonders bevorzugt von etwa +/-1° um eine Vorzugsbetrachtungsrichtung gegeben. Ganz allgemein ist der vorstehend genannte Winkelbereich um die Vorzugsbetrachtungsrichtung insbesondere stark von der Geometrie des gewählten Gitterbilds und der Anzahl der gewählten Gitterfelder abhängig.

Die Gittermuster der achromatischen Gitterfelder sind vorzugsweise elektronenstrahllithographisch erzeugt. Diese Technik ermöglicht es, Gittermuster herzustellen, bei denen für jede einzelne Gitterlinie die Parameter Orientierung, Beabstandung und Profilierung eindeutig vorgegeben werden können. Bei der Erzeugung eines Gitterfelds kann damit auch eine gewünschte Zufallsverteilung der Parameter Orientierung, Beabstandung und Profilierung der Gitterlinien mit einer vorgegebenen Wahrscheinlichkeits- bzw. Dichtefunktion verwirklicht werden.

Es hat sich als zweckmäßig herausgestellt, wenn die Strichgitterlinien eine Linienprofiltiefe zwischen etwa 100 nm und etwa 400 nm aufweisen. Das Verhältnis von Linienbreite zur mittleren Beabstandung in den Gitterfeldern beträgt vorteilhaft etwa 1:2. Die Strichgitterlinien weisen bevorzugt ein sinoidales Profil, symmetrisches Dreiecksprofil oder asymmetrisches Dreiecksprofil (Sägezahnprofil) oder ein Rechtecksprofil (Binärstruktur) auf. Selbstverständlich sind grundsätzlich auch beliebige andere Profile einsetzbar, wobei von den gesamten Profilen die Sägezahnprofile durch eine besonders hohe Leuchtkraft und die sinoidalen Profile durch eine verhältnismäßig zuverlässige Herstellung charakterisiert sind.

Das erfindungsgemäße Gitterbild selbst ist vorzugsweise mit einem reflektierenden oder hochbrechenden Material beschichtet. Als reflektierende Materialien kommen alle Metalle und viele Metalllegierungen in Betracht. Beispiele für geeignete hochbrechende Materialien sind CaS, CrO₂, ZnS, TiO₂ oder SiOₓ. Vorteilhaft besteht ein signifikanter Unterschied in den Brechungsindizes des Mediums, in das das Gitterbild eingebracht ist, und des hochbrechenden Materials, vorzugsweise ist die Differenz sogar größer als 0,5. Das Gitterbild kann in eingebetteter oder nicht eingebetteter Ausgestaltung erzeugt werden. Zur Einbettung eignen sich beispielsweise PVC, PET, Polyester oder eine UV-Lackschicht.

Selbstverständlich lassen sich die erfindungsgemäßen Gitterbilder mit weiteren visuellen und/oder maschinenlesbaren Sicherheitsmerkmalen kombinieren. So kann das Gitterbild beispielsweise mit weiteren Funktionsschichten, wie etwa polarisierenden, phasenschiebenden, leitfähigen, magnetischen oder lumineszierenden Schichten ausgestattet werden.

In einer besonders bevorzugten Ausführungsform ist das erfindungsgemäße Gitterbild mit einem farbkippenden Dünnschichtaufbau kombiniert. Dabei kann die Gesamtfläche des Gitterbildes oder auch nur eine Teilfläche des Gitterbildes mit dem Dünnschichtaufbau versehen werden. Der Dünnschichtaufbau kann je nach Anwendung opak oder auch semitransparent ausgeführt werden und umfasst mindestens drei Schichten. Beispielsweise kann der Schichtaufbau eine Reflexionsschicht, eine Absorberschicht und eine zwischen diesen beiden Schichten liegende Dielektrikumsschicht umfassen.

Die Erfindung umfasst auch ein Verfahren zum Herstellen eines Gitterbildes gemäß dem Anspruch 11.

Unterschiedlichste Bedampfungsverfahren sind zur Erzeugung der weiter oben genannten, reflektierenden, hochbrechenden und Dünnschichten geeignet. Eine methodische Gruppe bildet Physical Vapor Deposition (PVD) mit Schiffchenbedampfung, Bedampfung durch Widerstandsheizung, Bedampfung durch Induktionsheizung oder auch Elektronenstrahlbedampfung, Sputtern (DC oder AC) und Lichtbogenbedampfung. Andererseits kann die Bedampfung auch als Chemical Vapor Deposition (CVD) erfolgen, wie z.B. Sputtern im reaktiven Plasma oder jede andere plasmaunterstützte Bedampfungsart. Es besteht grundsätzlich auch die Möglichkeit, Dielektrikumsschichten aufzudrucken.

Die weiter oben genannte Kombination von achromatischen Gitterbereichen und farbkippenden Dünnschichtaufbauten ist sehr schwer zu fälschen, da die Technologien zur Herstellung dieser Elemente äußerst schwer zu beschaffen sind. Darüber hinaus kann das Design der achromatischen Gitterbereiche und des Dünnschichtaufbaus aufeinander genau abgestimmt werden, so dass völlig neuartige optische Effekte erzielt werden können.

Die Erfindung umfasst ferner ein Sicherheitselement mit einem Gitterbild der oben beschriebenen Art. Das Sicherheitselement kann insbesondere ein Sicherheitsfaden, ein Etikett oder ein Transferelement sein. Die Erfindung umfasst auch ein Sicherheitspapier mit einem solchen Sicherheitselement sowie einen Datenträger, der mit einem Gitterbild, einem Sicherheitselement oder einem Sicherheitspapier der beschriebenen Art ausgestattet ist. Bei dem Datenträger kann es sich insbesondere um eine Banknote, ein Wertdokument, einen Pass, eine Ausweis- oder Kreditkarte oder eine Urkunde handeln. Das beschriebene Sicherheitselement, Sicherheitspapier oder der Datenträger kann zur Absicherung von Gegenständen beliebiger Art eingesetzt werden.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem erfindungsgemäßen Sicherheitselement mit einem achromatischen, reliefartig erscheinenden Mattstruktur-Gitterbild,
- Fig. 2: eine detailliertere Aufsicht auf das Sicherheitselement der Fig. 1, wobei eines der Gitterfelder des Gitterbilds vergrößert dargestellt ist,
- Fig. 3: einen Ausschnitt eines Gitterbilds nach einem Ausführungsbeispiel der Erfindung, bei dem in den Gitterfeldern der Gittermuster-Parameter Orientierung über die Fläche des Gitterfelds zufällig variiert,
- Fig. 4: eine Darstellung wie Fig. 3 für ein Ausführungsbeispiel mit größerer Orientierungsstreuung,
- Fig. 5: zur Erläuterung der Entstehung eines reliefartigen Bildeindrucks in (a) die Reflexion von Strahlung an einem echten Relief und in (b) die Nachbildung einer solchen Reliefstruktur durch ein erfindungsgemäßes Gitterbild, und
- Fig. 6: einen Querschnitt durch ein erfindungsgemäßes Sicherheitselement mit Dünnschichtaufbau.

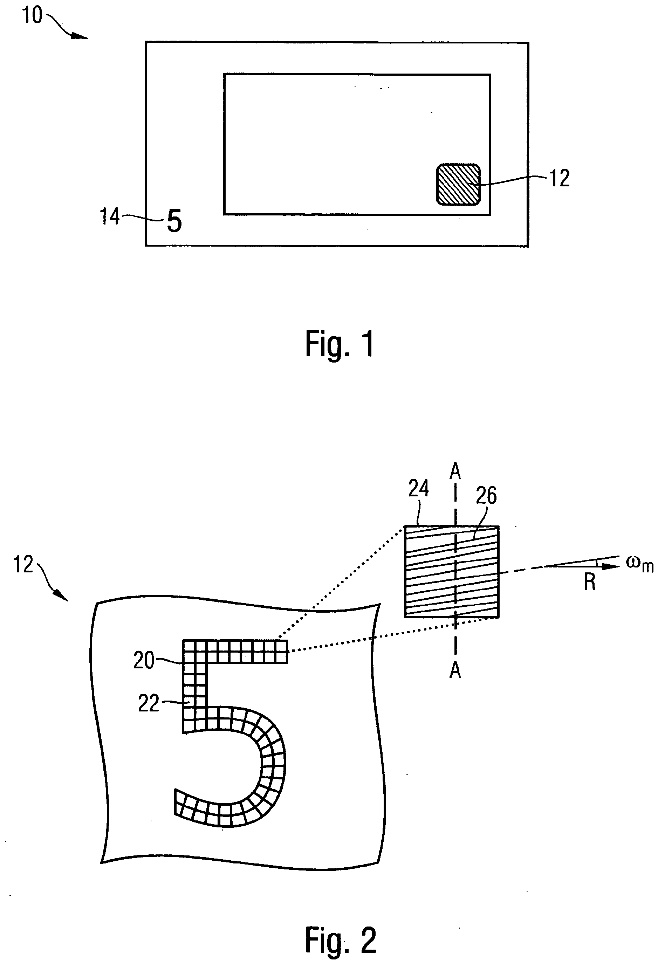

Die Erfindung wird nun am Beispiel einer Banknote erläutert. Fig. 1 zeigt dazu eine schematische Darstellung einer Banknote 10, die ein erfindungsgemäßes Sicherheitselement in Form eines aufgeklebten Transferelements 12 aufweist.

Es versteht sich, dass die Erfindung nicht auf Transferelemente und Banknoten beschränkt ist, sondern überall eingesetzt werden kann, wo Gitterbilder zur Anwendung kommen können, beispielsweise bei Uhrenzifferblättern und Modeschmuck, bei Etiketten auf Waren und Verpackungen, bei Sicherheitselementen auf Dokumenten, Ausweisen, Pässen, Kreditkarten, Gesundheitskarten usw. Bei Banknoten und ähnlichen Dokumenten kommen beispielsweise außer Transferelementen auch Sicherheitsfäden und außer Aufsichtselementen auch Durchsichtselemente, wie Durchsichtsfenster, zur Ausstattung mit Gitterbildern infrage.

Wie in der detaillierteren Aufsicht auf das Sicherheitselement 12 der Fig. 2 dargestellt, enthält das Sicherheitselement 12 ein achromatisches, reliefartig erscheinendes Mattstruktur-Gitterbild 20 mit einer Vielzahl von Gitterfeldern 22, die so angeordnet sind, dass sie zusammen ein vorbestimmtes, reliefartig erscheinendes Motiv bilden. Im Ausführungsbeispiel sind die Gitterfelder 22 in Form der Ziffer "5" angeordnet, die zugleich die Denomination 14 der Banknote 10 darstellt.

Die Gitterfelder 22 weisen jeweils ein elektromagnetische Strahlung beeinflussendes Gittermuster auf, das aus einer Vielzahl gerader Strichgitterlinien 26 besteht, wie anhand des vergrößert dargestellten Gitterfelds 24 beispielhaft gezeigt. Die Gitterfelder 22 sind in Fig. 2 zur Illustration stark vergrößert und nur in kleiner Zahl dargestellt. In der Praxis ist das dargestellte Motiv 20 typischerweise aus einer Vielzahl von Gitterfeldern 22 mit einer Abmessung von (100 x 100) µm² oder weniger gebildet, so dass die einzelnen Gitterfelder 22 mit bloßem Auge gerade noch oder nicht erkennbar sind.

Die aus geraden Strichgitterlinien 26 bestehenden Gittermuster der Gitterfelder 22, 24 können durch charakteristische Gittermuster-Parameter beschrieben werden, insbesondere durch die Parameter Orientierung, Beabstandung und Profilierung der Gitterlinien. Der Parameter "Orientierung" gibt dabei die azimutale Orientierung der einzelnen Gitterlinien 26 eines Gitterfelds 22 an, die beispielsweise durch einen Winkel ω bezogen auf eine Referenzrichtung R ausgedrückt werden kann. Der Parameter "Beabstandung" gibt den Abstand benachbarter Gitterlinien 26 an, der beispielsweise durch eine Gitterkonstante g ausgedrückt werden kann, und der Parameter "Profilierung" beschreibt das Linienprofil P der Gitterlinien 26, beispielsweise ein sinusförmiges Linienprofil.

Die Gitterfelder 22, 24 weisen jeweils ein betrachtungswinkelabhängiges, jedoch nicht farbiges, sondern silbrigmattes visuelles Erscheinungsbild auf. Um ein derartiges Erscheinungsbild zu erhalten, ist vorgesehen, dass in jedem Gitterfeld zumindest einer der Gittermuster-Parameter "Orientierung", "Beabstandung" und "Profilierung" mit einer vorgegebenen Streuung über der Fläche des Gitterfelds zufällig variiert. Eine zufällige Variation bedeutet dabei, dass der entsprechende Parameter einer bestimmten Wahrscheinlichkeitsfunktion oder Dichtefunktion gehorcht, wie oben genauer erläutert.

Bei einer solchen zufälligen Variation der Gittermuster-Parameter innerhalb der Gitterfelder 22, 24 können die Gitterfelder 22, 24 insgesamt durch die mittleren Werte dieser Parameter und deren Streuungen beschrieben werden. Insbesondere können die Gitterfelder 22, 24 durch die Gitterfeld-Parameter "mittlere Orientierung" und "Orientierungsstreuung", durch die Gitterfeld-Parameter "mittlere Beabstandung" und "Beabstandungsstreuung" und durch die Gitterfeld-Parameter "mittlere Profilierung" und "Profilierungsstreuung" charakterisiert werden.

Weist ein Gittermuster-Parameter innerhalb eines Gitterfelds keine Variation auf, so ist dessen Streuung gleich Null. Weist beispielsweise der Gittermuster-Parameter "Orientierung" in einem Gitterfeld keine Variation auf, so entspricht der Wert des zugehörigen Gitterfeld-Parameters "mittlere Orientierung" dem konstanten Wert des Gittermuster-Parameters "Orientierung" und der Gitterfeld-Parameter "Orientierungsstreuung" hat den Wert Null. Folgt andererseits der Gittermuster-Parameter "Orientierung" beispielsweise einer gaußschen Normalverteilung, ist die Wahrscheinlichkeit, dass eine Gitterlinie 26 eine bestimmte Orientierung ω aufweist, also durch eine Dichte proportional zu exp(-(ω)-ωₘ)²/2(Δω)²) gegeben ist, so entspricht der Wert des zugehörigen Gitterfeld-Parameters "mittlere Orientierung" dem Mittelwert ωₘ aller Orientierungen, und der Gitterfeld-Parameter "Orientierungsstreuung" hat den Wert Δω.

Der Wert des Parameters "mittlere Orientierung" legt eine Vorzugsrichtung des jeweiligen Gitterfelds 22, 24 fest, die zusammen mit den Werten der weiteren Parameter einen Betrachtungsbereich bestimmt, aus dem das Gitterfeld 22, 24 visuell in Erscheinung tritt. Der Betrachtungsbereich kann beispielsweise durch einen Winkelbereich von +/-10° um eine Vorzugsbetrachtungsrichtung gegeben sein. Wie oben bereits erläutert, bildet das Gittermuster durch die zufällige Variation zumindest eines der Gittermuster-Parameter keine diffraktive Struktur, sondern eine Mattstruktur, bei der nicht diffraktive, sondern achromatische Streueffekte das visuelle Erscheinungsbild dominieren, so dass das Gittermuster für den Betrachter im Wesentlichen ein nicht farbiges, silbrigmattes Erscheinungsbild erzeugt.

Zurückkommend auf die Darstellung der Fig. 2 sind in dem Gitterfeld 24 zur Illustration Gitterlinien 26 gezeigt, deren Orientierungen mit einer Orientierungsstreuung von Δω = 2° zufällig um eine mittlere Orientierung ωₘ = 10°, bezogen auf die Referenzrichtung R, schwanken.

Um das reliefartig erscheinende Motiv 20 zu erzeugen, ändert sich zumindest der Parameter "mittlere Orientierung" der Gitterlinien erfindungsgemäß von Gitterfeld 22 zum benachbarten Gitterfeld 22 diskret, das heißt, der Parameter "mittlere Orientierung" ändert sich von einem Gitterfeld zu einem benachbarten Gitterfeld sprunghaft um mindestens einen bestimmten Wert ω_{d}, beispielsweise um mindestens ω_{d} = 2°, also z. B. etwa 5°.

Insgesamt ist somit jedes Gitterfeld 22 des Motivs 20 durch einen Parametersatz (ωₘ, Δω, gₘ, Δg, Pₘ, ΔP) mit den Parametern mittlere Orientierung (ωₘ, Orientierungsstreuung Δω, mittlere Beabstandung gₘ, Beabstandungsstreuung Δg, mittlere Profilierung Pₘ und Profilierungsstreuung ΔP charakterisiert, wobei zumindest eine der Streuungen Δω, Δg, ΔP von Null verschieden ist und sich zumindest der Parameter ωₘ innerhalb des gebildeten Motivs 20 von Gitterfeld 22 zu Gitterfeld 22 diskret ändert.

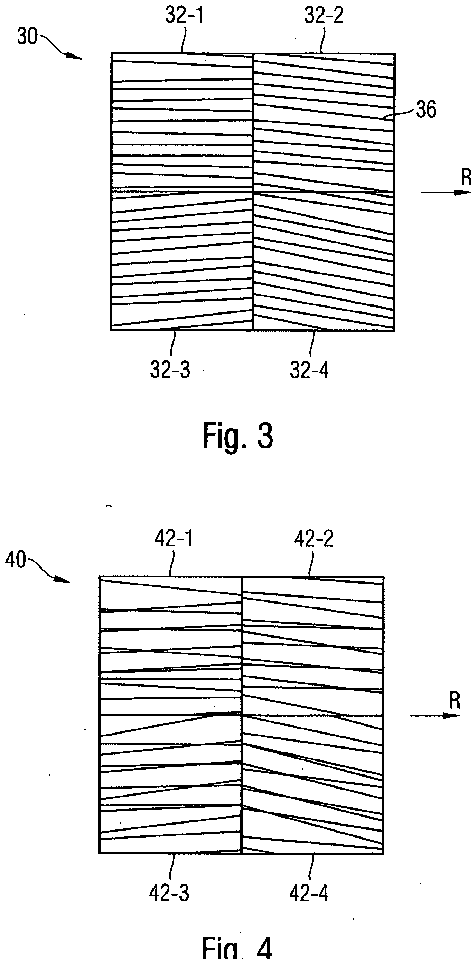

Fig. 3 zeigt dazu einen Ausschnitt eines Gitterbilds 30 nach einem Ausführungsbeispiel der Erfindung, bei dem in den Gitterfeldern jeweils nur der Gittermuster-Parameter Orientierung der Gitterlinien 36 über die Fläche des jeweiligen Gitterfelds zufällig variiert, während die Gitterkonstante und das Linienprofil keine Variation aufweisen. Im beschriebenen Fall variiert die Gitterkonstante einzelner Gitterlinien, d.h. benachbarter Gitterlinien, aufgrund der zufälligen Variation des Gittermuster-Parameters Orientierung im Wesentlichen ebenfalls zufällig, allerdings ist der über die Länge eines Gitterfeldes gemittelte Abstand benachbarter Linien konstant, so dass in den Beispielen der Figuren 3 und 4 auch zur Vereinfachung der Beschreibung von einer konstanten Gitterkonstante gesprochen wird.

In den beispielhaft gezeigten vier Gitterfeldern 32-1, 32-2, 32-3 und 32-4 weist der Gitterfeld-Parameter "mittlere Orientierung" beispielsweise die Werte ω_{m,1} = 0°, ω_{m,2} = -5°, ω_{m,3} = +5° und ω_{m,4} = -10°, jeweils bezogen auf die Referenzrichtung R, auf. Der Wert des Gitterfeld-Parameters Orientierungsstreuung Δω) ist dabei in allen Gitterfeldern gleich und hat im Ausführungsbeispiel der Fig. 3 den sehr kleinen Wert von Δω = 0,01°. Die konstante Beabstandung (mittlere Beabstandung gₘ) liegt im Ausführungsbeispiel bei 800 nm und als konstantes Linienprofil Pₘ ist ein Sinusprofil gewählt. Da zumindest das Linienprofil keine Variation aufweist, ist auch zumindest die Profilierungsstreuung ΔP gleich Null.

Fig. 4 zeigt einen Ausschnitt eines Gitterbilds 40 nach einem weiteren Ausführungsbeispiel der Erfindung, bei dem wie in Fig. 3 nur der Gittermuster-Parameter Orientierung über die Fläche der Gitterfelder 42-1, 42-2, 42-3 und 42-4 zufällig variiert. Die Werte des Gitterfeld-Parameters mittlere Orientierung entsprechen dabei den Werten der Gitterfelder 32-1, 32-2, 32-3 und 32-4 der Fig. 3, betragen also ω_{m,1} = 0°, ω_{m,2} = -5°, ω_{m,3} = +5° und ω_{m,4} = -10°, bezogen auf die Referenzrichtung R. Auch der Gitterfeld-Parameter Orientierungsstreuung Δω ist in allen Gitterfeldern gleich, weist allerdings im Unterschied zur Gestaltung der Fig. 3 den wesentlich höherer Wert Δω = 5° auf.

Durch geeignete Wahl des Werts des Gitterfeld-Parameters Orientierungsstreuung Δω kann der visuelle Eindruck des dargestellten Motivs 20 in weitem Bereich zwischen einem stark reliefartigen bzw. linsenartigen Eindruck (kleine Werte der Orientierungsstreuung Δω) und einem eher flach und wie eine gebürstete Oberfläche erscheinenden Eindruck (große Werte der Orientierungsstreuung Δω) eingestellt werden. Variiert neben dem Gittermuster-Parameter Orientierung auch die Beabstandung und/ oder die Profilierung über die Fläche der Gitterfelder, so tragen auch die Streuungen dieser Parameter zum visuellen Eindruck bei. Allgemein gilt dabei, dass größere Streuungen zu einem eher flach und gebürstet wirkenden Eindruck, kleinere Streuungen zu einem stärker reliefartigen bzw. linsenartigen Eindruck führen.

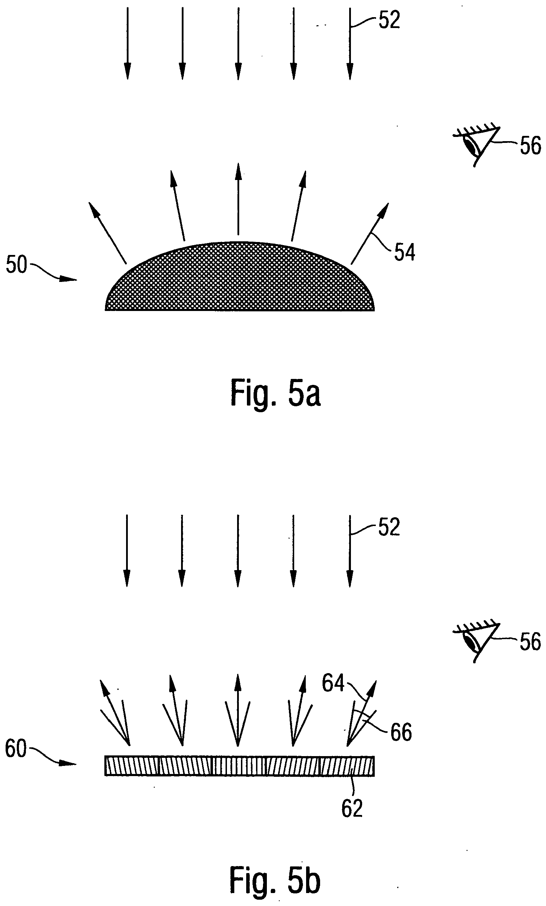

Das Entstehen eines reliefartigen Bildeindrucks durch Streuung an den Mattstrukturen der ebenen Gitterfelder ist nunmehr mit Bezug auf Fig. 5 erläutert. Zunächst zeigt der Querschnitt der Fig. 5(a) schematisch, wie ein echtes Relief 50 einfallende Strahlung 52 je nach der lokalen Orientierung des Reliefs 50 in verschiedene Reflexionsrichtungen 54 reflektiert und dadurch die Reliefstruktur 50 für einen Betrachter 56 als dreidimensionales Gebilde erkennbar macht.

Der visuelle Eindruck einer derartigen Reliefstruktur 50 kann durch ein erfindungsgemäßes ebenes Gitterbild 60 nachgebildet werden, wie in Fig. 5(b) illustriert. Der Ausschnitt der Fig. 5(b) kann beispielsweise einen Schnitt durch ein Mattstruktur-Gitterbild wie das in Fig. 2 gezeigte Mattstruktur-Gitterbild 20 darstellen.

In den achromatischen Gitterfeldern 62 des Gitterbilds 60 ist durch die Wahl der Parameter mittlere Orientierung ωₘ, mittlere Beabstandung gₘ, und mittlere Profilierung Pₘ jeweils eine Betrachtungsrichtung 64 festgelegt, in die die einfallende Strahlung 52 gestreut wird. Die Breite 66 des Betrachtungsbereichs, in den die Strahlung gestreut wird, ist dabei durch die Größe der Streuungsparameter Δω, Δg und ΔP festgelegt. Größere Streuungen führen dabei zu einem breiten Betrachtungsbereich 66, kleinere Streuungen zu einem schmäleren Betrachtungsbereich 66.

Um die Reliefstruktur 50 der Fig. 5(a) als vorgegebenes Motiv nachzubilden, sind die Parameter ωₘ, gₘ und Pₘ der Gitterfelder 62 des Gitterbilds 60 gerade so gewählt, dass die Betrachtungsrichtung 64 eines Gitterfelds 62 mit der entsprechenden lokalen Reflexionsrichtung 54 der Reliefsstruktur zusammenfällt. Bei Anordnung der Gitterfelder 62 in Form der Grundfläche der Reliefsstruktur 50 (vorgegebenes Motiv) erscheint das Gitterbild 60 für den Betrachter 56 dann mit einem von der dreidimensionalen Gestalt der Reliefstruktur 50 vorgegebenen, reliefartigen visuellen Eindruck.

Die Stärke des reliefartigen Bildeindrucks wird dabei durch die Breite der Betrachtungsbereiche 66 bestimmt. Schmale Betrachtungsbereiche 66, also kleine Werte der Streuungsparameter Δω, Δg und ΔP, erzeugen einen stark ausgeprägten reliefartigen Bildeindruck, während breitere Betrachtungsbereiche 66, also größere Werte der Streuungsparameter Δω, Δg und ΔP, einen weniger starken Reliefeindruck erzeugen. Durch geeignete Wahl der Parameter Orientierungsstreuung, Beabstandungsstreuung und Profilierungsstreuung kann so ein gewünschter Bildeindruck für das Gitterbild 60 eingestellt werden.

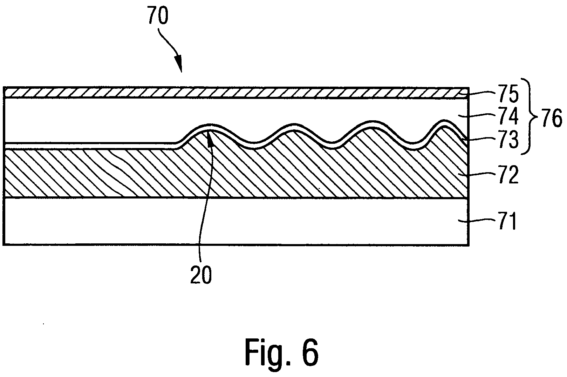

Fig. 6 zeigt ein Sicherheitselement 70 mit dem in Fig. 2 dargestellten erfindungsgemäßen Gitterbild 20 im Querschnitt entlang der Linie A-A des Gitterfelds 24, wobei auf dem Gitterbild 20 ein Dünnschichtaufbau 76 vollflächig aufgebracht ist. In der vorliegenden Ausführungsform wurde auf ein transparentes Folienmaterial 71 ein Lack 72 aufgebracht, in den das Gitterbild 20 eingebracht wurde. Darüber wurde vollflächig ein Dünnschichtaufbau aufgedampft, der in diesem Fall aus einer Absorberschicht 73, einer hochbrechenden dielektrischen Schicht 74 und einer reflektierenden Schicht 75 besteht. Die Schichten des Dünnschichtaufbaus 76 wurden im Vakuumdampfverfahren aufgebracht. Abhängig von der Anordnung des Sicherheitselements auf oder in dem zu schützenden Datenträger kann die Schichtenfolge des Dünnschichtaufbaus auch variieren, so dass z. B. auf dem Gitterbild zunächst eine Reflektorschicht und darüber eine dielektrische Schicht und eine Absorberschicht angeordnet sein können. Die Kombination des erfindungsgemäßen Sicherheitselements und eines Dünnschichtaufbaus gemäß Fig. 5 ermöglicht für den Betrachter außerordentlich ansprechende Farbkippeffekte und erhöht gleichzeitig die Fälschungssicherheit durch das synergistische Zusammenwirken zweier Sicherheitselemente.

## Patentansprüche

1. Gitterbild mit zwei oder mehr achromatischen Gitterfeldern (22, 24) mit einem betrachtungswinkelabhängigen visuellen Erscheinungsbild, die jeweils ein elektromagnetische Strahlung beeinflussendes Gittermuster aus einer Vielzahl gerader Strichgitterlinien (26) enthalten, **wobei**
- die Gitterfelder (22, 24) in Form eines vorbestimmten Motivs (20) angeordnet sind,
- die Gittermuster der Gitterfelder jeweils durch die Gittermuster-Parameter Orientierung, Beabstandung und Profilierung der Gitterlinien (26) charakterisiert sind,
- in den Gitterfeldern (22, 24) zumindest einer der Gittermuster-Parameter Orientierung, Beabstandung und Profilierung mit einer vorgegebenen Streuung über die Fläche des Gitterfelds zufällig variiert, so dass die Gitterfelder (22, 24) jeweils durch die Gitterfeld-Parameter mittlere Orientierung, Orientierungsstreuung, mittlere Beabstandung, Beabstandungsstreuung, mittlere Profilierung und Profilierungsstreuung der Gitterlinien (26) charakterisiert sind, und
- jedes Gitterfeld eine Vorzugsrichtung aufweist, die einen Betrachtungsbereich festlegt, aus dem das achromatische Gitterfeld mit einem matten, vorzugsweise silbrigen Erscheinungsbild visuell in Erscheinung tritt, und wobei
- innerhalb des vorbestimmten Motivs (20) sich zumindest der Gitterfeld-Parameter mittlere Orientierung von Gitterfeld (22, 24) zu Gitterfeld (22, 24) diskret ändert, **dadurch gekennzeichnet, dass**
- die Gitterfeld-Parameter Orientierungsstreuung, Beabstandungsstreuung und Profilierungsstreuung so gewählt sind, dass das vorbestimmte Motiv (20) einen von der dreidimensionalen Gestalt einer Reliefstruktur (50) vorgegebenen relief- oder linsenartigen dreidimensionalen Eindruck vermittelt, und **dass**
- die Gitterfeld-Parameter mittlere Orientierung, mittlere Beabstandung, mittlere Profilierung so gewählt sind, dass die Vorzugsrichtung eines Gitterfelds mit der entsprechenden lokalen Reflexionsrichtung (54) der Reliefstruktur (50) zusammenfällt.

2. Gitterbild nach Anspruch 1, **dadurch gekennzeichnet, dass** in den Gitterfeldern der Gittermuster-Parameter Orientierung und im Wesentlichen auch der Gittermuster-Parameter Beabstandung über die Fläche des Gitterfelds zufällig variieren.

3. Gitterbild nach Anspruch 1 oder 2, **dadurch gekennzeichnet, dass** die Gitterfeld-Parameter Orientierungsstreuung, Beabstandungsstreuung und Profilierungsstreuung in allen Gitterfeldern des vorbestimmten Motivs jeweils den gleichen Wert oder jeweils mehrere bestimmte Werte aufweisen.

4. Gitterbild nach wenigstens einem der Ansprüche 1 bis 3, **dadurch gekennzeichnet, dass** sich innerhalb des vorbestimmten Motivs neben dem Gittermuster-Parameter Orientierung auch der Gittermuster-Parameter Beabstandung der Gitterlinien von Gitterfeld zu Gitterfeld diskret ändert.

5. Gitterbild nach wenigstens einem der Ansprüche 1 bis 4, **dadurch gekennzeichnet, dass** sich der Gitterfeld-Parameter mittlere Orientierung innerhalb des vorbestimmten Motivs von einem Gitterfeld zu einem benachbarten Gitterfeld um etwa 0,01° bis über etwa 3° ändert, und/oder dass der Gitterfeld-Parameter mittlere Beabstandung zwischen 300 nm und 3000 nm, vorzugsweise zwischen 500 nm und 1600 nm liegt.

6. Gitterbild nach wenigstens einem der Ansprüche 1 bis 5, **dadurch gekennzeichnet, dass** der Wert des Gitterfeld-Parameters Orientierungsstreuung weniger als +/-10°, bevorzugt weniger als +/- 3°, besonders bevorzugt weniger als +/- 0,3° beträgt.

7. Gitterbild nach wenigstens einem der Ansprüche 1 bis 6, **dadurch gekennzeichnet, dass die** Ausdehnung der Gitterfelder in zumindest einer Dimension im Bereich oder unterhalb der Auflösungsgrenze des bloßen Auges liegt, insbesondere unterhalb von 100 µm liegt, wobei bevorzugt die Gitterfelder durch schmale Streifen mit einer Breite im Bereich oder unterhalb der Auflösungsgrenze des Auges oder durch kleine Flächenelemente beliebiger Form mit einer Größe im Bereich oder unterhalb der Auflösungsgrenze des Auges ausgebildet sind.

8. Gitterbild nach wenigstens einem der Ansprüche 1 bis 7, **dadurch gekennzeichnet, dass** der Betrachtungsbereich insbesondere durch einen Winkelbereich von etwa +/-10°, bevorzugt von etwa +/- 3°, besonders bevorzugt von etwa +/-1° um eine Vorzugsbetrachtungsrichtung gegeben ist.

9. Gitterbild nach wenigstens einem der Ansprüche 1 bis 8, **dadurch gekennzeichnet, dass** die Strichgitterlinien in den Gitterfeldern ein symmetrisches oder asymmetrisches Dreiecksprofil oder sinoidales Profil aufweisen.

10. Gitterbild nach wenigstens einem der Ansprüche 1 bis 9, **dadurch gekennzeichnet, dass** das Gitterbild mit einem reflektierenden oder hochbrechenden Material beschichtet ist, und/oder dass das Gitterbild einen farbkippenden Dünnschichtaufbau aufweist.

11. Verfahren zum Herstellen eines Gitterbilds, bei dem
- in einem Substrat zwei oder mehr achromatische Gitterfelder (22, 24) mit einem betrachtungswinkelabhängigen visuellen Erscheinungsbild erzeugt werden, die jeweils mit einem elektromagnetische Strahlung beeinflussenden Gittermuster aus einer Vielzahl gerader Strichgitterlinien gefüllt werden, wobei die Gittermuster der Gitterfelder (22, 24) jeweils durch die Gittermuster-Parameter Orientierung, Beabstandung und Profilierung der Gitterlinien (26) charakterisiert sind,
- die Gitterfelder (22, 24) in dem Substrat in Form eines vorbestimmten Motivs (20) angeordnet werden,
- die Gitterfelder (22, 24) mit Gittermustern erzeugt werden, bei denen zumindest einer der Gittermuster-Parameter Orientierung, Beabstandung und Profilierung mit einer vorgegebenen Streuung über die Fläche des Gitterfelds zufällig variiert, so dass die Gitterfelder (22, 24) jeweils durch die Gitterfeld-Parameter mittlere Orientierung, Orientierungsstreuung, mittlere Beabstandung, Beabstandungsstreuung, mittlere Profilierung und Profilierungsstreuung der Gitterlinien charakterisiert sind, und
- jedes Gitterfeld eine Vorzugsrichtung aufweist, die einen Betrachtungsbereich festlegt, aus dem das achromatische Gitterfeld mit einem matten, vorzugsweise silbrigen Erscheinungsbild visuell in Erscheinung tritt, und wobei
- die Gittermuster der Gitterfelder (22, 24) so aufeinander abgestimmt werden, dass sich innerhalb des gebildeten Motivs (20) zumindest der Gitterfeld-Parameter mittlere Orientierung von Gitterfeld (22, 24) zu Gitterfeld (22, 24) diskret ändert, **dadurch gekennzeichnet, dass**
- die Gitterfeld-Parameter Orientierungsstreuung, Beabstandungsstreuung und Profilierungsstreuung so gewählt werden, dass das vorbestimmte Motiv (20) einen von der dreidimensionalen Gestalt einer Reliefstruktur (50) vorgegebenen relief- oder linsenartigen dreidimensionalen Eindruck vermittelt, und **dass**
- die Gitterfeld-Parameter mittlere Orientierung, mittlere Beabstandung, mittlere Profilierung so gewählt werden, dass die Vorzugsrichtung eines Gitterfelds mit der entsprechenden lokalen Reflexionsrichtung (54) der Reliefstruktur (50) zusammenfällt.

12. Verfahren nach Anspruch 11, **dadurch gekennzeichnet, dass** die Gitterfelder elektronenstrahllithographisch erzeugt werden.

13. Sicherheitselement mit einem Gitterbild nach wenigstens einem der Ansprüche 1 bis 10 oder einem nach wenigstens einem der Ansprüche 11 oder 12 hergestellten Gitterbild, wobei das Sicherheitselement bevorzugt ein Sicherheitsfaden, ein Etikett oder ein Transferelement ist.

14. Sicherheitspapier mit einem Gitterbild nach wenigstens einem der Ansprüche 1 bis 10, mit einem nach wenigstens einem der Ansprüche 11 oder 12 hergestellten Gitterbild oder einem Sicherheitselement nach Anspruch 13.

15. Datenträger mit einem Gitterbild nach wenigstens einem der Ansprüche 1 bis10, mit einem nach wenigstens einem der Ansprüche 11 oder 12 hergestellten Gitterbild, einem Sicherheitselement nach Anspruch 13 oder einem Sicherheitspapier nach Anspruch 14, wobei der Datenträger bevorzugt eine Banknote, ein Wertdokument, ein Pass, eine Ausweis- oder Kreditkarte oder eine Urkunde ist.

## Claims

1. A grating image having two or more achromatic grating fields (22, 24) having a viewing-angle-dependent visual appearance, each of which includes an electromagnetic-radiation-influencing grating pattern composed of a plurality of straight grating lines (26),
- the grating fields (22, 24) being arranged in the form of a predetermined motif (20),
- the grating patterns of the grating fields each being **characterized by** the grating pattern parameters orientation, spacing and profile of the grating lines (26),
- in the grating fields (22, 24), at least one of the grating pattern parameters orientation, spacing and profile varying randomly over the surface of the grating field with a specified distribution such that the grating fields (22, 24) are each **characterized by** the grating field parameters average orientation, orientation distribution, average spacing, spacing distribution, average profile and profile distribution of the grating lines (26), and
- each grating field having a preferred direction that establishes a viewing range from which the achromatic grating field appears visually having a matte, preferably silvery appearance, and
- within the predetermined motif (20), at least the grating field parameter average orientation changing discretely from grating field (22, 24) to grating field (22, 24), **characterized in that**
- the grating field parameters orientation distribution, spacing distribution and profile distribution are chosen in such a way that the predetermined motif (20) conveys a relief- or lens-like three-dimensional impression that is determined by the three-dimensional form of a relief pattern (50), and **in that**
- the grating field parameters average orientation, average spacing and average profile are chosen in such a way that the preferred direction of a grating field coincides with the corresponding local reflection direction (54) of the relief pattern (50).

2. The grating image according to claim 1, **characterized in that,** in the grating fields, the grating pattern parameter orientation and substantially also the grating pattern parameter spacing vary randomly over the surface of the grating field.

3. The grating image according to claim 1 or 2, **characterized in that** the grating field parameters orientation distribution, spacing distribution and profile distribution each have the same value, or each have multiple specific values in all grating fields of the predetermined motif.

4. The grating image according to at least one of claims 1 to 3, **characterized in that**, within the predetermined motif, in addition to the grating pattern parameter orientation, also the grating pattern parameter spacing of the grating lines changes discretely from grating field to grating field.

5. The grating image according to at least one of claims 1 to 4, **characterized in that** the grating field parameter average orientation within the predetermined motif changes from one grating field to an adjacent grating field by about 0.01° to over about 3°, and/ or **in that** the grating field parameter average spacing is between 300 nm and 3000 nm, preferably between 500 nm and 1600 nm.

6. The grating image according to at least one of claims 1 to 5, **characterized in that** the value of the grating field parameter orientation distribution is less than +/- 10°, preferably less than +/-3°, particularly preferably less than +/-0.3°.

7. The grating image according to at least one of claims 1 to 6, **characterized in that** the expanse of the grating fields in at least one dimension is in the range of or below the resolution limit of the naked eye, especially is below 100 µm, the grating fields preferably being formed by narrow strips having a width in the range of or below the resolution limit of the eye or by small surface elements of arbitrary shape having a size in the range of or below the resolution limit of the eye.

8. The grating image according to at least one of claims 1 to 7, **characterized in that** the viewing range is especially given by an angle range of about +/- 10°, preferably of about +/- 3°, particularly preferably of about +/-1° about a preferred viewing direction.

9. The grating image according to at least one of claims 1 to 8, **characterized in that** the grating lines in the grating fields have a symmetrical or asymmetrical triangular profile or sinusoidal profile.

10. The grating image according to at least one of claims 1 to 9, **characterized in that** the grating image is coated with a reflective or high-index material, and/or **in that** the grating image comprises a color-shifting thin-film structure.

11. A method for manufacturing a grating image, in which:
- in a substrate, two or more achromatic grating fields (22, 24) having a viewing-angle-dependent visual appearance are produced that are each filled with an electromagnetic-radiation-influencing grating pattern composed of a plurality of straight grating lines, the grating patterns of the grating fields (22, 24) each being **characterized by** the grating pattern parameters orientation, spacing and profile of the grating lines (26),
- the grating fields (22, 24) in the substrate are arranged in the form of a predetermined motif (20),
- the grating fields (22, 24) are produced having grating patterns in which at least one of the grating pattern parameters orientation, spacing and profile varies randomly over the surface of the grating field with a specified distribution such that the grating fields (22, 24) are each **characterized by** the grating field parameters average orientation, orientation distribution, average spacing, spacing distribution, average profile and profile distribution of the grating lines, and
- each grating field has a preferred direction that establishes a viewing range from which the achromatic grating field appears visually having a matte, preferably silvery appearance, and
- the grating patterns of the grating fields (22, 24) being coordinated with each other in such a way that, within the motif (20) formed, at least the grating field parameter average orientation changes discretely from grating field (22, 24) to grating field (22, 24), **characterized in that**
- the grating field parameters orientation distribution, spacing distribution and profile distribution are chosen in such a way that the predetermined motif (20) conveys a relief- or lens-like three-dimensional impression that is determined by the three-dimensional form of a relief pattern (50), and **in that**
- the grating field parameters average orientation, average spacing, average profile are chosen in such a way that the preferred direction of a grating field coincides with the corresponding local reflection direction (54) of the relief pattern (50).

12. The method according to claim 11, **characterized in that** the grating fields are produced electron beam lithographically.

13. A security element having a grating image according to at least one of claims 1 to 10, or a grating image manufactured according to at least one of claims 11 or 12, the security element preferably being a security thread, a label or a transfer element.

14. A security paper having a grating image according to at least one of claims 1 to 10, or having a grating image manufactured according to at least one of claims 11 or 12 or a security element according to claim 13.

15. A data carrier having a grating image according to at least one of claims 1 to 10, or having a grating image manufactured according to at least one of claims 11 or 12, a security element according to claim 13 or a security paper according to claim 14, the data carrier preferably being a banknote, a value document, a passport, an identification or credit card, or a certificate.

## Revendications

1. Motif à réseau diffractant avec deux ou davantage de champs de réseau achromatiques (22, 24) avec une apparence visuelle dépendant de l'angle d'observation, lesquels contiennent respectivement un motif de réseau, influençant un rayonnement électromagnétique, en une pluralité de lignes de réseau de diffraction à traits droits (26), dans lequel
- les champs de réseau (22, 24) sont disposés en forme d'un motif (20) prédéterminé,
- les motifs de réseau des champs de réseau sont respectivement **caractérisés par** les paramètres de motif de réseau : orientation, espacement, et profilage des lignes de réseau (26),
- dans les champs de réseau (22, 24), au moins l'un des paramètres de motif de réseau : orientation, espacement, et profilage varie aléatoirement avec une distribution prescrite sur la surface du champ de réseau de manière à ce que les champs de réseau (22, 24) sont respectivement **caractérisés par** les paramètres de champ de réseau : orientation moyenne, distribution de l'orientation, espacement moyen, distribution de l'espacement, profilage moyen et distribution du profilage des lignes de réseau (26), et
- chaque champ de réseau présente une direction préférentielle, laquelle détermine un champ d'observation à partir duquel le champ de réseau achromatique apparait visuellement avec une apparence matte, de préférence argentée, et dans lequel
- à l'intérieur du motif prédéfini (20), au moins le paramètre de champ de réseau d'orientation moyenne varie discrètement d'un champ de réseau (22, 24) à un autre champ de réseau (22, 24), **caractérisé en ce que**
- les paramètres de champ de réseau : distribution de l'orientation, distribution de l'espacement, et distribution de profilage sont choisis de telle sorte que le motif prédéfini (20) confère une impression tridimensionnelle semblable à un relief ou une lentille prescrite par la forme tridimensionnelle d'une structure en relief (50), et que .
- les paramètres de champ de réseau : orientation moyenne, espacement moyen, profilage moyen sont choisis de telle sorte que la direction préférentielle d'un champ de réseau coïncide avec la direction de réflexion locale correspondante (54) de la structure en relief (50).

2. Motif à réseau diffractant selon la revendication 1, **caractérisé en ce que**, dans les champs de réseau, le paramètre de motif de réseau d'orientation, et sensiblement également le paramètre de motif de réseau d'espacement, varient de manière aléatoire sur la surface du champ de réseau.

3. Motif à réseau diffractant selon la revendication 1 ou 2, **caractérisé en ce que** les paramètres de champ de réseau : distribution de l'orientation, distribution de l'espacement, et distribution du profilage présentent, dans tous les champs de réseau du motif prédéfini, respectivement la même valeur ou respectivement plusieurs valeurs définies.

4. Motif à réseau diffractant selon l'une au moins des revendications 1 à 3, **caractérisé en ce qu'**à l'intérieur du motif prédéfini, mis à part le paramètre de motif de réseau d'orientation, également le paramètre de motif de réseau d'espacement des lignes de réseau varie discrètement d'un champ de réseau à l'autre.

5. Motif à réseau diffractant selon l'une au moins des revendications 1 à 4, **caractérisé en ce que** le paramètre de champ de réseau d'orientation moyenne varie à l'intérieur du motif prédéfini d'un champ de réseau à un champ de réseau voisin de l'ordre de près de 0,01° à près de plus de 3° et/ou que le paramètre de champ de réseau d'espacement moyen est compris entre 300 nm et 3000 nm, de préférence entre 500 nm et 1600 nm.

6. Motif à réseau diffractant selon l'une au moins des revendications 1 à 5, **caractérisé en ce que** la valeur du paramètre de champ de réseau de distribution d'orientation est de moins de +/-10°, de préférence de moins de +/-3°, de manière particulièrement préférée, de moins de +/- 0,3°.

7. Motif à réseau diffractant selon l'une au moins des revendications 1 à 6, **caractérisé en ce que** l'extension des champs de réseau dans au moins une dimension se situe dans la plage de limite de résolution, ou en-deçà de celle-ci, de l'oeil nu, se situe en particulier en-deçà de 100 µm, dans lequel, de manière préférée, les champs de réseau sont réalisés par de minces bandes d'une largeur dans la plage de la limite de résolution, ou en-deçà de celle-ci, de l'oeil, ou par de petits éléments de surface d'une forme quelconque avec une taille dans la plage de la limite de résolution, ou en-deçà de celle-ci, de l'oeil.

8. Motif à réseau diffractant selon l'une au moins des revendications 1 à 7, **caractérisé en ce que** le champ d'observation est en particulier donné par une plage angulaire de près de +/- 10°, de préférence de près de +/- 3°, de manière particulièrement préférée, de près de +/- 1° autour d'une direction d'observation préférentielle.

9. Motif à réseau diffractant selon l'une des revendications 1 à 8, **caractérisé en ce que** les lignes de réseau de diffraction à traits dans les champs de réseau présentent un profil triangulaire symétrique ou asymétrique ou un profil sinusoïdal.

10. Motif à réseau diffractant selon l'une au moins des revendications 1 à 9, **caractérisé en ce que** le motif à réseau diffractant est revêtu d'un matériau réfléchissant ou fortement réfringent, et/ou que le motif à réseau diffractant présente une structure à couches minces à changement de couleur.

11. Procédé pour la fabrication d'un motif à réseau diffractant, dans lequel
- deux ou davantage de champs de réseau (22, 24) avec une apparence visuelle en fonction de l'angle d'observation sont générés dans un substrat, lesquels sont respectivement remplis par un motif de réseau, influençant un rayonnement électromagnétique, en une pluralité de lignes de réseau de diffraction à traits droits, dans lequel les motifs de réseau des champs de réseau (22, 24) sont respectivement **caractérisés par** les paramètres de motif de réseau : orientation, espacement, et profilage des lignes de réseau (26),
- les champs de réseau (22, 24) sont disposés en forme d'un motif prédéfini (20) dans le substrat,
- les champs de réseau (22, 24) sont produits avec des motifs de réseau où au moins l'un des paramètres de motif de réseau : orientation, espacement, et profilage varie aléatoirement avec une distribution prescrite sur la surface du champs de réseau de manière à ce que les champs de réseau (22, 24) sont respectivement **caractérisés par** les paramètres de champ de réseau : orientation moyenne, distribution de l'orientation, espacement moyen, distribution de l'espacement, profilage moyen et distribution de profilage des lignes de réseau, et
- chaque champ de réseau présente une orientation préférentielle, laquelle détermine un champ d'observation, à partir duquel le champ de réseau achromatique apparait visuellement avec une apparence matte, de préférence argentée, et dans lequel
- les motifs de réseau des champs de réseau (22, 24) sont adaptés les uns aux autres de telle sorte que, à l'intérieur du motif (20) formé, au moins le paramètre de champ de réseau d'orientation moyenne varie discrètement d'un champ de réseau (22, 24) à un autre champ de réseau (22, 24), **caractérisé en ce que**
- les paramètres de champ de réseau : distribution de l'orientation, distribution de l'espacement, et distribution du profilage sont choisis de telle sorte que le motif prédéfini (20) confère une impression tridimensionnelle semblable à un relief ou une lentille prescrite par la forme tridimensionnelle d'une structure en relief (50), et que
- les paramètres de champ de réseau : orientation moyenne, espacement moyen, profilage moyen sont choisis de telle sorte que la direction préférentielle d'un champ de réseau coïncide avec la direction de réflexion locale correspondante (54) de la structure en relief (50).

12. Procédé selon la revendication 11, **caractérisé en ce que** les champs de réseau sont générés par lithographie par faisceau d'électrons.

13. Élément de sécurité avec un motif à réseau diffractant selon l'une au moins des revendications 1 à 10 ou un motif à réseau diffractant fabriqué selon l'une au moins des revendications 11 ou 12, dans lequel l'élément de sécurité est de préférence un fil de sécurité, une étiquette, ou un élément de transfert.

14. Papier de sécurité avec un motif à réseau diffractant selon l'une au moins des revendications 1 à 10, avec un motif à réseau diffractant fabriqué selon l'une au moins des revendications 11 ou 12 ou un élément de sécurité selon la revendication 13.

15. Support de données avec un motif à réseau diffractant selon l'une au moins des revendications 1 à 10, avec un motif à réseau diffractant fabriqué selon l'une au moins des revendications 11 ou 12, un élément de sécurité selon la revendication 13 ou un papier de sécurité selon la revendication 14, dans lequel le support de données est de préférence un billet de banque, un document de valeur, un passeport, une carte d'identité ou de crédit, ou un document.
